# EUROPEAN PATENT SPECIFICATION

(11) **EP 4 446 160 B1**
(45) Date of publication and mention of the grant of the patent: **18.03.2026**
(21) Application number: 21966823.3
(22) Date of filing: 10.12.2021
(51) Int. Cl.: B60L 53/16, B62D 25/24, B60K 15/05

(54) **VEHICLE AND OPENING/CLOSING STRUCTURE OF CHARGING PORT THEREOF**
FAHRZEUG UND ÖFFNUNGS-/SCHLIESSSTRUKTUR FÜR LADEANSCHLUSS DAVON
VÉHICULE ET STRUCTURE D'OUVERTURE/DE FERMETURE D'UN ORIFICE DE CHARGEMENT CORRESPONDANT

(43) Date of publication of application: 16.10.2024
(73) Proprietor: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: KONG, Xiangxue, Hangzhou, Zhejiang 310051 (CN); WANG, Yang, Hangzhou, Zhejiang 310051 (CN); JI, Cai, Hangzhou, Zhejiang 310051 (CN); CHEN, Jianxian, Hangzhou, Zhejiang 310051 (CN); ZHANG, Wei, Hangzhou, Zhejiang 310051 (CN); RAN, Hongbin, Hangzhou, Zhejiang 310051 (CN)
(74) Representative: Barker Brettell LLP
(86) International application number: PCT/CN2021/137134
(87) International publication number: WO 2023/102902

(56) References cited:
- WO-A1-2016/020239
- CN-A- 105 610 214
- CN-A- 108 340 974
- CN-A- 110 386 197
- CN-U- 212 423 300
- CN-U- 212 737 791
- CN-U- 214 607 740
- DE-A1- 102011 090 205
- DE-A1- 102019 132 408
- DE-U1- 202011 050 412
- US-A1- 2019 326 701
- US-A1- 2020 223 308

## Description

### TECHNICAL FIELD

The present invention relates to the field of vehicles and, in particular, to a vehicle and an opening/closing structure for a charging opening thereof.

### BACKGROUND

With the development of technology, new energy vehicles will become a competitive direction for major automobile companies in the future, and charging opening covers matching with them have gradually become one of the highlights of attention.

In the prior art, there are many improvement solutions for the charging opening covers, and the common opening modes mainly include the following:
(1) an ordinary upward opening type, which has simple opening structure, mature technology, small size of a charging opening box and low cost, but lacks a sense of technology and fashion;
(2) an ordinary horizontal opening type, which is similar to the ordinary upward opening type in that although it has a simple opening structure, mature technology, small size of a charging opening box, and low cost, but lacks a sense of technology and fashion;
(3) a four-bar linkage outward opening type, which has relatively fashionable opening mode, mature technology, and slightly lower cost, but the opening size is increased, resulting in great restriction on modeling;
(4) an internally sliding track type, which has an opening mode full of sense of technology, less restriction on modeling, and small appearance size, but the internal structure is complex, which requires greater internal space; and
(5) an outward rotatingly opening type, which is novel in the opening mode and requires small appearance size, but has poor rigidity and stability, especially for a structure of a quick and slow charging integrated charging socket, where an outer plate is larger and the rigidity is worse, so it is not applicable.

US 2019326701 A1 discloses that a charging socket cover for an electrically operated motor vehicle having a closing apparatus, a pivoting apparatus and a drive apparatus. The pivoting apparatus is driven by way of the drive apparatus in order to pivot the closing apparatus between a closed position, in which the closing apparatus closes an opening which is made in a vehicle body part of the motor vehicle, and an open position, in which the closing apparatus releases the opening and is arranged substantially behind the vehicle body part.

Because of the advantages and disadvantages of the above-mentioned opening modes, it is urgent to develop an opening mode that can improve the user's experience and reduce the modeling restriction.

### SUMMARY

The present invention is set out in the appended set of claims. An object of a first aspect of the present invention is to provide an opening/closing structure for a charging opening of a vehicle, which can improve the user experience and reduce restrictions on modeling.

A further object of the first aspect of the present invention is to improve the rigidity and stability of the entire opening/closing structure.

An object of a second aspect of the present invention is to provide a vehicle.

In particular, the present invention provides an opening/closing structure for a charging opening of a vehicle including:
a charging opening cover, disposed on a body shell of the vehicle and configured to open or close a charging opening on the body shell; and
the driving device, disposed inside the body shell, connected with the charging opening cover, and configured to: first drive the charging opening cover in a closed state to sink inwards from the body shell, and then drive the charging opening cover to rotate, thereby at least partially open the charging opening when the charging opening needs to be opened; first drive the charging opening cover in an open state to rotate to align with the charging opening, and then drive the charging opening cover to rise towards the outside of the body shell, thereby closing the charging opening when the charging opening needs to be closed.

Optionally, the opening/closing structure for the charging opening of the vehicle further includes:
a charging opening box, covered on the charging opening from the inside of the body shell, where at least part of a side wall of the charging opening box has a first contour adapted to a rotation trajectory of an end of the charging opening cover;
an inner side of the charging opening cover is connected with a rotation hinge, and the driving device is connected with the charging opening cover through the rotation hinge, and in a process that the charging opening cover is driven to be rotated, the rotation hinge is slidably connected with the side wall of the charging opening box having the first contour.

Optionally, the rotation hinge is provided with a connecting post, the driving device is a rotating motor with an output shaft that is reciprocatingly stretchable, and the output shaft of the rotating motor is coaxially connected with the connecting post.

Optionally, the side wall of the charging opening box having the first contour is provided with a penetrating give-way opening extending along a circumferential direction of the charging opening box, and an end of the rotation hinge is provided with a slider disposed and extending in a direction perpendicular to a rotating axis of the charging opening cover, and the slider is slidably connected within the give-way opening.

Optionally, an inner side of the side wall of the charging opening box having the first contour is provided with a boss, a side of the boss facing the inside of the charging opening box is provided with a chute extending along the circumferential direction of the charging opening box, and an end of the rotation hinge is provided with a slider extending in a direction perpendicular to a rotating axis of the charging opening cover, and the slider is slidably connected within the chute.

Optionally, the boss includes two protruded ridges arranged up and down in a height direction of the charging opening box, and an interval between the two protruded ridges forms the chute.

Optionally, an inner side of the side wall of the charging opening box having the first contour is provided with a boss, a side of the boss facing the charging opening is provided with a chute extending along the circumferential direction of the charging opening box, and the rotation hinge is provided with a slider extending in a direction parallel to a rotating axis of the charging opening cover, and the slider is slidably connected within the chute.

Optionally, the inner side of the side wall of the charging opening box having the first contour protrudes towards the inside of the charging opening box to form the boss; and
a mesa of the boss adjacent to the charging opening is recessed toward a side facing away from the charging opening to form the chute.

Optionally, a sealing adhesive strip is disposed between an edge of a side of the charging opening box facing the body shell and the body shell.

Optionally, a quick charging port and a slow charging port for charging by a charging gun are disposed in the charging opening box according to a first standard, and the quick charging port and the slow charging port are disposed up and down in a same column; and
the driving device is further configured to drive the charging opening cover to rotate for a first rotation angle so as to at least completely expose the quick charging port and the slow charging port.

Optionally, a quick charging port and a slow charging port for charging by a charging gun are disposed in the charging opening box according to a second standard, and the quick charging port and the slow charging port are disposed side by side from left to right; and
the driving device is further configured to drive the charging opening cover to rotate for a second rotation angle so as to at least completely expose the quick charging port and the slow charging port.

According to the second aspect of the present invention, the present invention provides a vehicle, which includes a body shell, and the body shell is provided with the opening/closing structures for the charging opening of the vehicle according to any one of the above.

In the vehicle and the opening/closing structure for the charging opening thereof according to the embodiments of the present invention, the charging opening cover is rotated and opened towards the inside of the body, so that the opening mode can be ensured to be full of sense technology and fashion. Because the mode of opening towards the inside has less requirements on the appearance size, the size of the charging opening can be made smaller, which can reduce the restriction on gaps of the opening when modeling it and improve the use experience. In addition, compared with the track straight sliding type, the rotatable opening mode can save internal space and improve space utilization.

Further, in the vehicle and the opening/closing structure for the charging opening thereof according to the embodiments of the present invention, when the driving device drives the charging opening cover to rotate, the charging opening cover is also slidably connected with the side wall of the charging opening box through the rotation hinge, so that the side wall of the charging opening box can play a certain structural support role for the charging opening cover, and the joint between the driving device and the charging opening cover is not easy to break, which improves the rigidity and stability of the whole opening/closing structure.

The above and other objects, advantages and features of the present invention will be more apparent to those skilled in the art from the following detailed description of specific embodiments of the present invention in conjunction with the drawings.

### BRIEF DESCRIPTION OF DRAWINGS

Various other advantages and benefits will become clear to those skilled in the art by reading the following detailed description of the preferred implementations. The drawings are only for the purpose of illustrating the preferred implementations, and are not considered as limiting the present invention. Moreover, the same parts are denoted by the same reference numbers throughout the drawings. In the drawings:
FIG. 1 is a partial schematic view of a body shell according to one embodiment of the present invention;
FIG. 2 is a state diagram in which a charging opening is partially opened according to one embodiment of the present invention;
FIG. 3 is a schematic structural view of a charging opening box according to one embodiment of the present invention;
FIG. 4 is a schematic diagram of a positional relationship between a charging opening cover and a charging opening box according to one embodiment of the present invention;
FIG. 5 is a schematic diagram of a connection structure of a charging opening cover and a charging opening box according to one embodiment of the present invention;
FIG. 6 is a schematic diagram of a connection structure of a charging opening cover and a charging opening box according to another embodiment of the present invention;
FIG. 7 is a cross-sectional view of the connection structure of the charging opening cover and the charging opening box in FIG. 6;
FIG. 8 is a schematic diagram of a connection structure of a charging opening cover and a charging opening box according to yet another embodiment of the present invention;
FIG. 9 is a cross-sectional view of the connection structure of the charging opening cover and the charging opening box in FIG. 8;

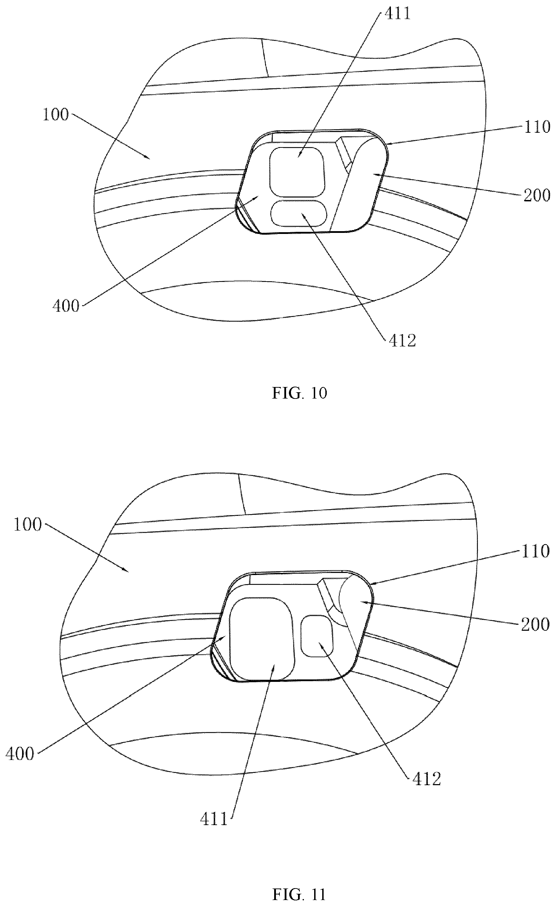

FIG. 10 is a schematic diagram of a layout of quick and slow charging ports according to one embodiment of the present invention; and
FIG. 11 is a schematic diagram of a layout of quick and slow charging ports according to another embodiment of the present invention.

100. body shell; 110. charging opening; 200. charging opening cover; 210, rotation hinge; 211, connecting post; 212, slider; 300. driving device; 400, charging opening box; 410, port; 411, quick charging port; 412, slow charging port; 421, give-way opening; 422, boss; 423, chute; 500, sealing adhesive strip.

### DESCRIPTION OF EMBODIMENTS

Exemplary embodiments of the present disclosure will be described in more detail below with reference to the drawings. Although exemplary embodiments of the present disclosure are shown in the drawings, it should be understood that the present disclosure may be implemented in various forms and should not be limited by the embodiments set forth herein. On the contrary, these embodiments are provided for a more thorough understanding of the present disclosure, and can fully convey the scope of the present disclosure to those skilled in the art.

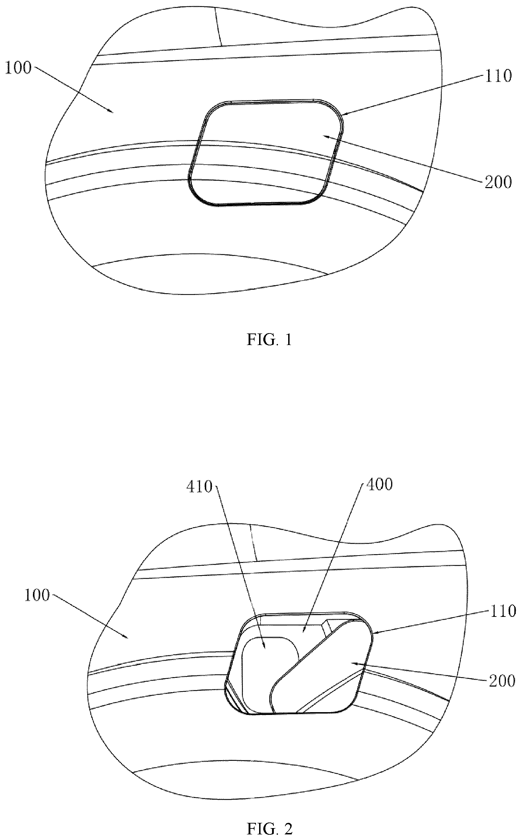

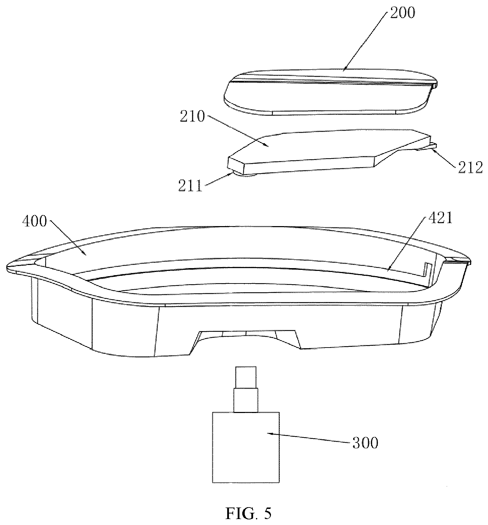

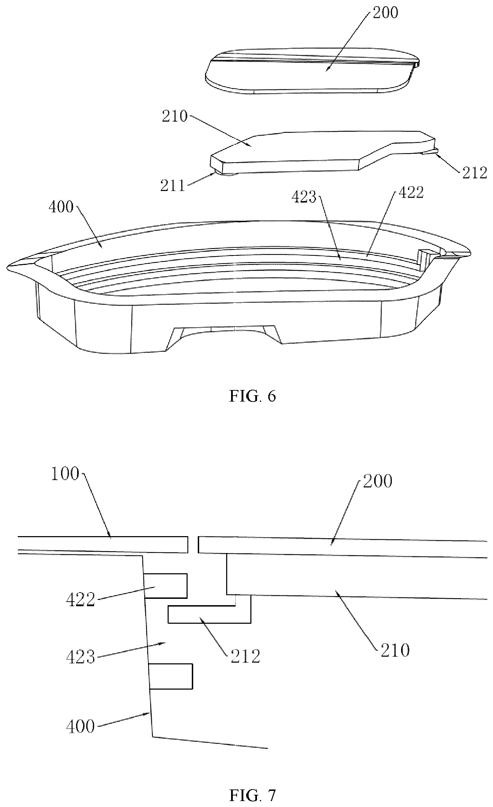

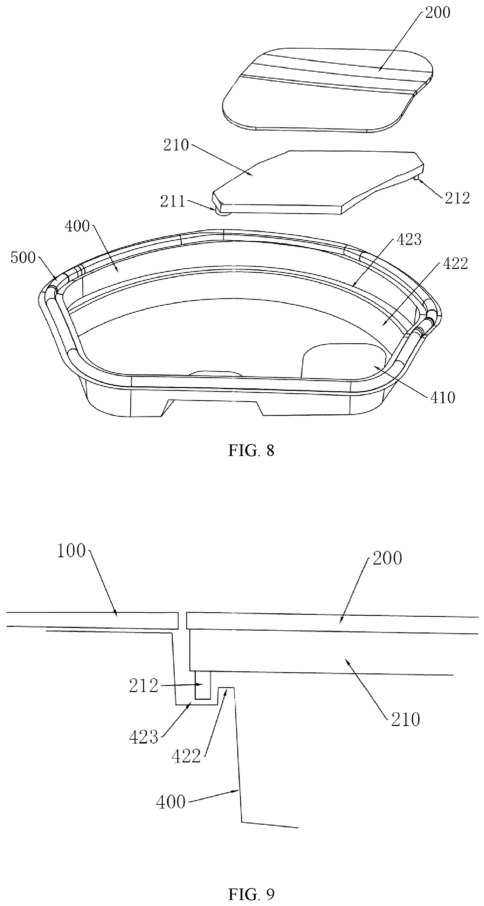

Referring to FIG. 1 to FIG. 9, in order to solve the above problems, an embodiment of the present invention provides an opening/closing structure for a charging opening 110 of a vehicle and a vehicle having the opening/closing structure.

The vehicle may be a pure electric vehicle or a rechargeable hybrid vehicle, and it includes a body shell 100, and a charging opening 110 is defined on the body shell 100, and an opening/closing structure is provided at the charging opening 110 for controllably opening or closing the charging opening 110, thereby charging the vehicle. Of course, without deviating from the principle of the present invention, those skilled in the art may completely apply the opening/closing structure of the present invention to other scenarios, for example, it may also be used for an oil port of a vehicle.

The opening/closing structure in the embodiment of the present invention at least includes a charging opening cover 200 and a driving device 300, where the charging opening cover 200 is disposed on the body shell 100 of the vehicle and configured to open or close the charging opening 110 on the body shell 100. The driving device 300 is disposed inside the body shell 100 and connected with the charging opening cover 200. The driving device 300 is configured to: first drive the charging opening cover 200 in a closed state to sink inward from the body shell 100, and then drive the charging opening cover 200 to rotate, thereby at least partially opening the charging opening 110 when the charging opening 110 needs to be opened; and first drive the charging opening cover 200 in an open state to rotate to align with the charging opening 110, and then drive the charging opening cover 200 to rise towards the outside of the body shell, thereby closing the charging opening 110 when the charging opening 110 needs to be closed.

In the opening/closing structure for the charging opening 110 of the vehicle in the embodiment of the present invention, the charging opening cover 200 is opened towards the inside of the body, which can ensure that the opening mode is full of sense of technology and fashion. Since the mode of opening towards the inside has less requirements on the appearance size, it can also reduce the restriction on gaps of the opening when modeling it, and improve the user experience.

In this embodiment, the charging opening 110 may be designed to be approximately parallelogram, and correspondingly, the charging opening cover 200 is also approximately parallelogram, and a size of the charging opening cover 200 is slightly smaller than that of the charging opening 110. The driving device 300 may be connected to an end of the charging opening cover 200. In this way, in a process of driving the charging opening cover 200 to rotate, the charging opening cover 200 is opened in a fan-shaped manner, which can effectively reduce the occupation of an internal space of the body compared with a rail direct sliding opening mode.

Further, the opening/closing structure may also include a charging opening box 400, which is covered on the charging opening 110 from the inside of the body shell 100, and at least part of a side wall of the charging opening box 400 has a first contour adapted to a rotation trajectory of an end of the charging opening cover 200. An inner side of the charging opening cover 200 is connected with a rotation hinge 210, and the driving device 300 is connected with the charging opening cover 200 through the rotation hinge 210. In the process that the charging opening cover 200 is driven to be rotated, the rotation hinge 210 is slidably connected with the side wall of the charging opening box 400 having the first contour.

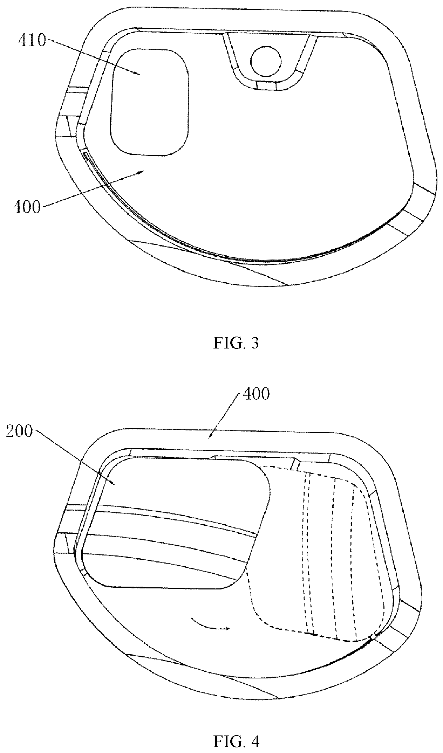

It is to be noted that the so-called first contour means that the side wall of the charging opening box 400 is correspondingly designed into an arc-shaped side wall according to the arc-shaped moving trajectory of the end of the charging opening box 200 during the rotation of the charging opening cover 200 according to a certain rotation radius, so that the charging opening cover 200 can always be slidably connected with the side wall of the charging opening box 400 during the rotation of the charging opening cover 200. For example, referring to FIG. 4, in the process of driving the charging opening cover 200 to rotate counterclockwise, a left lower end of the charging opening cover 200 is always slidably connected with the side wall of the charging opening box 400 having the first contour.

It may be understood that in a case in which the charging opening box 400 is not disposed, when the driving device 300 drives the charging opening cover 200 to rotate, the charging opening cover 200 has no connection relationship with other parts, which is rotated in a suspended manner correspondingly. In a case in which the charging opening box 400 is disposed, when the driving device 300 drives the charging opening cover 200 to rotate, the charging opening cover 200 is also slidably connected with the side wall of the charging opening box 400 through the rotation hinge 210. So that the side wall of the charging opening box 400 can play a certain structural support role for the charging opening cover 200, and the joint between the driving device 300 and the charging opening cover 200 is not easy to break, which improves the rigidity and stability of the whole opening/closing structure.

The charging opening box 400 may be a plastic piece, and the color may be painted according to the vehicle to reduce the color difference. The charging opening box 400 is approximately in a bowl-shaped structure, a size of a rim of the bowl is larger than that of the charging opening 110, and the charging opening box 400 is covered on the charging opening 110 from the inside of the body and cannot be rotated. A port 410 is disposed in the bottom (a side facing away from the body shell 100) of the charging opening box 400, and the port 410 is used for a charging base inside the body to extend outwards into the charging opening box 400 for charging.

The rotation hinge 210 may be in a plate-shape structure, fixedly connected to the inner side of the charging opening cover 200, or detachably connected with the charging opening cover 200 by a snap. A connecting post 211 is disposed at one end of the rotation hinge 210 (in this embodiment, a right upper end of the rotation hinge 210). The driving device 300 may be a rotating motor with an output shaft that is reciprocatingly stretchable, and its output shaft is coaxially connected with the connecting post 211. By driving the rotation hinge 210 to rotate, the charging opening cover is driven to move synchronously.

In an optional embodiment, the side wall of the charging opening box 400 having the first contour is provided with a penetrating give-way opening 421 extending along a circumferential direction of the charging opening box 400, and an end of the rotation hinge 210 is provided with a slider 212 extending in a direction perpendicular to a rotating axis of the charging opening cover 200, and the slider 212 is slidably connected within the give-way opening 421.

Considering that in the process of opening the charging opening 110, the driving device 300 first drives the charging opening cover 200 to sink inward from the body shell 100, therefore, the give-way opening 421 may extend from outside to inside along the side wall of the charging opening box 400, and then extend along the rotation trajectory, so that the slider 212 is always slidably connected within the give-way opening 421 during the driving device 300 driving the charging opening cover 200 to move.

In another optional embodiment, an inner side of the side wall of the charging opening box 400 having the first contour is provided with a boss 422, and a side of the boss 422 facing the inside of the charging opening box 400 is provided with a chute 423 extending along the circumferential direction of the charging opening box 400. An end of the rotation hinge 210 is provided with a slider 212 extending in a direction perpendicular to the rotating axis of the charging opening cover 200, and the slider 212 is slidably connected within the chute 423.

Specifically, the boss 422 may include two protruded ridges in an up-down arrangement in a height direction of the charging opening box 400, and an interval between the two protruded ridges forms a chute 423. Or, the boss 422 is in an integral solid strip structure, integrally formed with the charging opening box 400, and a side of the boss 422 facing the inside of the charging opening box 400 is provided with the chute 423.

In yet another optional embodiment, the sidewall of the charging opening box 400 having the first contour is provided with a boss 422 protruding towards the inside of the charging opening box 400, and one side of the boss 422 facing the charging opening 110 is provided with a chute 423 extending along the circumferential direction of the charging opening box 400, and the rotation hinge 210 is provided with a slider 212 extending in a direction parallel to the rotating axis of the charging opening cover 200, and the slider 212 is slidably connected within the chute 423.

Specifically, the side wall of the charging opening box 400 having the first contour protrudes toward the inside of the charging opening box 400 to form the boss 422. A mesa of the boss 422 adjacent to the charging opening 110 is recessed toward a side facing away from the charging opening 110 to form the chute 423.

In a specific implementation, a quick charging port 411 and a slow charging port 412 for charging by a charging gun are disposed in the charging opening box 400 according to a first standard, and the quick charging port 411 and the slow charging port 412 are disposed up and down in the same column. The driving device 300 is further configured to drive the charging opening cover 200 to rotate by a first rotation angle so as to at least completely expose the quick charging port 411 and the slow charging port 412.

In practical application, the first standard is the same as the European standard, and the quick charging port 411 and the slow charging port 412 may be used for charging by a charging gun meeting the European standard. In a case that the charging opening 110 is approximately parallelogram, the charging opening cover 200 is approximately parallelogram, and the driving motor is connected to the upper right end of the rotation hinge 210, when the driving motor drives the rotation hinge 210 to rotate the charging opening cover 200 counterclockwise by 70°, the quick charging port 411 and the slow charging port 412 in an up-down arrangement can be completely exposed.

In another specific implementation, the quick charging port 411 and the slow charging port 412 for charging by a charging gun are disposed in the charging opening box 400 according to a second standard, and the quick charging port 411 and the slow charging port 412 are disposed side by side from left to right. The driving device 300 is further configured to drive the charging opening cover 200 to rotate by a second rotation angle, so as to at least completely expose the quick charging port 411 and the slow charging port 412.

In practical application, the second standard is the same as the Chinese standard, and the quick charging port 411 and the slow charging port 412 may be used for charging by a charging gun meeting the Chinese standard. In a case in which the charging opening 110 is approximately parallelogram, the charging opening cover 200 is approximately parallelogram and the driving motor is connected to the right upper end of the rotation hinge 210, when the driving motor drives the rotation hinge 210 to rotate the charging opening cover 200 counterclockwise by 110°, the quick charging port 411 and the slow charging port 412 in left-right arrangement may be exposed.

A periphery of a side of the charging opening box 400 facing the body shell 100 has a turning edge, and a sealing adhesive strip 500 is disposed between the turning edge and the body shell 100, and the charging opening box 400 is bonded and fixed to the body shell 100 through the sealing adhesive strip 500. The charging opening box 400 may not only provide a certain structural support for the rotation of the charging opening cover 200, but also may play a dustproof and waterproof role for the quick charging opening 411 and the slow charging opening 412.

The charging opening box 400 covers the inner side of the charging opening cover 200, and the charging opening cover 200 and the rotation hinge 210 rotate in the charging opening box 400, and the charging opening box 400 may be designed into different shapes according to the different motion trajectories of the charging opening cover 200. The driving motor provides power for the movement of the charging opening cover 200, and the charging opening cover 200 may be rotated to an invisible area inside the body shell 100.

It can be said that the opening/closing structure for the charging opening 110 of the vehicle in the embodiments of the present invention not only has the advantages of the internally sliding track type and the outward rotatingly opening type, but also avoids the disadvantages of both, which can meet the urgent demand of the market and improve the user experience.

According to any one of the above optional embodiments or the combination of multiple optional embodiments, the embodiments of the present invention can achieve the following beneficial effects.

In the opening/closing structure of the vehicle and its charging opening 110 in the embodiments of the present invention, the charging opening cover 200 is rotated and opened towards the inside of the body, so that the opening mode can be ensured to be full of sense of technology and fashion. Because the mode of opening towards the inside has less requirements on the appearance size, the size of the charging opening 110 can be made smaller, which can also reduce the restriction on gaps of the opening when modeling it and improve the user experience. In addition, compared with the internally sliding track type, the rotatable opening mode can save internal space and improve space utilization.

Further, in the vehicle and the opening/closing structure for the charging opening 110 of the vehicle in the embodiments of the present invention, when the driving device 300 drives the charging opening cover 200 to rotate, the charging opening cover 200 is also slidably connected with the side wall of the charging opening cover box 400 through the rotation hinge 210, so that the side wall of the charging opening cover box 400 can play a certain structural support role for the charging opening cover 200, and the joint between the driving device 300 and the charging opening cover 200 is not easy to break, which improves the rigidity and stability of the whole opening/closing structure.

## Claims

1. An opening/closing structure for a charging opening (110) of a vehicle, comprising:
a charging opening cover (200), disposed on a body shell (100) of the vehicle and configured to open or close a charging opening (110) on the body shell (100); and
a driving device (300), disposed inside the body shell (100), connected with the charging opening cover (200), and configured to: first drive the charging opening cover (200) from a closed state to sink inwards from the body shell (100), and then drive the charging opening cover (200) to rotate, thereby at least partially open the charging opening (110) when the charging opening (110) needs to be opened; first drive the charging opening cover (200) from an open state to rotate to align with the charging opening (110), and then drive the charging opening cover (200) to rise towards the outside of the body shell (100), thereby closing the charging opening (110) when the charging opening (110) needs to be closed; **characterized in that** the opening/closing structure further comprises:
a charging opening box (400), covered on the charging opening (110) from the inside of the body shell (100), wherein at least part of a side wall of the charging opening box (400) has a first contour adapted to a rotation trajectory of an end of the charging opening cover (200);
an inner side of the charging opening cover (200) is connected with a rotation hinge (210), and the driving device (300) is connected with the charging opening cover (200) through the rotation hinge (210), and in a process that the charging opening cover (200) is driven to be rotated, the rotation hinge (210) is slidably connected with the side wall of the charging opening box (400) having the first contour.

2. The opening/closing structure for the charging opening (110) of the vehicle according to claim 1, wherein
the rotation hinge (210) is provided with a connecting post (211), the driving device (300) is a rotating motor with an output shaft that is reciprocatingly stretchable, and the output shaft of the rotating motor is coaxially connected with the connecting post (211).

3. The opening/closing structure for the charging opening (110) of the vehicle according to claim 1, wherein
the side wall of the charging opening box (400) having the first contour is provided with a penetrating give-way opening (421) extending along a circumferential direction of the charging opening box (400), and an end of the rotation hinge (210) is provided with a slider (212) extending in a direction perpendicular to a rotating axis of the charging opening cover (200), and the slider (212) is slidably connected within the give-way opening (421).

4. The opening/closing structure for the charging opening (110) of the vehicle according to claim 1, wherein
an inner side of the side wall of the charging opening box (400) having the first contour is provided with a boss (422), a side of the boss (422) facing the inside of the charging opening box (400) is provided with a chute (423) extending along the circumferential direction of the charging opening box (400), and an end of the rotation hinge (210) is provided with a slider (212) extending in a direction perpendicular to a rotating axis of the charging opening cover (200), and the slider (212) is slidably connected within the chute (423).

5. The opening/closing structure for the charging opening (110) of the vehicle according to claim 4, wherein
the boss (422) comprises two protruded ridges arranged up and down in a height direction of the charging opening box (400), and an interval between the two protruded ridges forms the chute (423).

6. The opening/closing structure for the charging opening (110) of the vehicle according to claim 1, wherein an inner side of the side wall of the charging opening box (400) having the first contour is provided with a boss (422), a side of the boss (422) facing the charging opening (110) is provided with a chute (423) extending along the circumferential direction of the charging opening box (400), and the rotation hinge (210) is provided with a slider (212) extending in a direction parallel to a rotating axis of the charging opening cover (200), and the slider (212) is slidably connected within the chute (423).

7. The opening/closing structure for the charging opening (110) of the vehicle according to claim 6, wherein
the inner side of the side wall of the charging opening box (400) having the first contour protrudes towards the inside of the charging opening box (400) to form the boss (422); and
a mesa of the boss (422) adjacent to the charging opening (110) is recessed toward a side facing away from the charging opening (110) to form the chute (423).

8. The opening/closing structure for the charging opening (110) of the vehicle according to claim 1, wherein
a sealing adhesive strip (500) is disposed between an edge of a side of the charging opening box (400) facing the body shell (100) and the body shell (100).

9. The opening/closing structure for the charging opening (110) of the vehicle according to claim 1, wherein
a quick charging port (411) and a slow charging port (412) for charging by a charging gun are disposed in the charging opening box (400) according to a first standard, and the quick charging port (411) and the slow charging port (412) are disposed up and down in a same column; and
the driving device (300) is further configured to drive the charging opening cover (200) to rotate for a first rotation angle so as to at least completely expose the quick charging port (411) and the slow charging port (412).

10. The opening/closing structure for the charging opening (110) of the vehicle according to claim 1, wherein
a quick charging port (411) and a slow charging port (412) for charging by a charging gun are disposed in the charging opening box (400) according to a second standard, and the quick charging port (411) and the slow charging port (412) are disposed side by side from left to right; and
the driving device (300) is further configured to drive the charging opening cover (200) to rotate for a second rotation angle so as to at least completely expose the quick charging port (411) and the slow charging port (412).

11. A vehicle comprising a body shell (100) provided with the opening/closing structure for the charging opening (110) of the vehicle according to any one of claims 1 to 10.

## Patentansprüche

1. Öffnungs-/Schließstruktur für eine Ladeöffnung (110) eines Fahrzeugs, umfassend:
eine Ladeöffnungsabdeckung (200), die an einer Karosserie (100) des Fahrzeugs vorgesehen und dazu konfiguriert ist, eine Ladeöffnung (110) an der Karosserie (100) zu öffnen oder zu schließen; und
eine Antriebsvorrichtung (300), die innerhalb der Karosserie (100) vorgesehen, mit der Ladeöffnungsabdeckung (200) verbunden und zu Folgendem konfiguriert ist: zuerst Antreiben der Ladeöffnungsabdeckung (200) von einem geschlossenen Zustand, um von der Karosserie (100) einwärts zu sinken, und dann Antreiben der Ladeöffnungsabdeckung (200), um sich zu drehen, wodurch die Ladeöffnung (110) zumindest teilweise geöffnet wird, wenn die Ladeöffnung (110) geöffnet werden muss; zuerst Antreiben der Ladeöffnungsabdeckung (200) von einem offenen Zustand, um sich zu drehen, um sich mit der Ladeöffnung (110) auszurichten, und dann Antreiben der Ladeöffnungsabdeckung (200), um zu der Außenseite der Karosserie (100) anzusteigen, wodurch die Ladeöffnung (110) geschlossen wird, wenn die Ladeöffnung (110) geschlossen werden muss; **dadurch gekennzeichnet, dass** die Öffnungs-/Schließstruktur ferner Folgendes umfasst:
einen Ladeöffnungskasten (400), der an der Ladeöffnung (110) von der Innenseite der Karosserie (100) abgedeckt ist, wobei zumindest ein Teil einer Seitenwand des Ladeöffnungskastens (400) eine erste Kontur aufweist, die an eine Drehtrajektorie eines Endes der Ladeöffnungsabdeckung (200) angepasst ist;
wobei eine Innenseite der Ladeöffnungsabdeckung (200) mit einem Drehgelenk (210) verbunden ist und die Antriebsvorrichtung (300) mit der Ladeöffnungsabdeckung (200) durch das Drehgelenk (210) verbunden ist und in einem Prozess, in dem die Ladeöffnungsabdeckung (200) angetrieben wird, um gedreht zu werden, das Drehgelenk (210) verschiebbar mit der Seitenwand des Ladeöffnungskastens (400), welche die erste Kontur aufweist, verbunden ist.

2. Öffnungs-/Schließstruktur für die Ladeöffnung (110) des Fahrzeugs nach Anspruch 1, wobei
das Drehgelenk (210) mit einem Verbindungspfosten (211) versehen ist, die Antriebsvorrichtung (300) ein Drehmotor mit einer Ausgangswelle ist, die hin- und hergehend streckbar ist, und die Ausgangswelle des Drehmotors koaxial mit dem Verbindungspfosten (211) verbunden ist.

3. Öffnungs-/Schließstruktur für die Ladeöffnung (110) des Fahrzeugs nach Anspruch 1, wobei
die Seitenwand des Ladeöffnungskastens (400), welche die erste Kontur aufweist, mit einer Eindringausweichöffnung (421) versehen ist, die sich entlang einer Umfangsrichtung des Ladeöffnungskastens (400) erstreckt, und ein Ende des Drehgelenks (210) mit einem Schieber (212) versehen ist, der sich in einer Richtung senkrecht zu einer Drehachse der Ladeöffnungsabdeckung (200) erstreckt, und der Schieber (212) verschiebbar innerhalb der Ausweichöffnung (421) verbunden ist.

4. Öffnungs-/Schließstruktur für die Ladeöffnung (110) des Fahrzeugs nach Anspruch 1, wobei
eine Innenseite der Seitenwand des Ladeöffnungskastens (400), welche die erste Kontur aufweist, mit einem Vorsprung (422) versehen ist, eine Seite des Vorsprungs (422), die der Innenseite des Ladeöffnungskastens (400) zugewandt ist, mit einer Rinne (423) versehen ist, die sich entlang der Umfangsrichtung des Ladeöffnungskastens (400) erstreckt, und ein Ende des Drehgelenks (210) mit einem Schieber (212) versehen ist, der sich in einer Richtung senkrecht zu einer Drehachse der Ladeöffnungsabdeckung (200) erstreckt, und der Schieber (212) verschiebbar innerhalb der Rinne (423) verbunden ist.

5. Öffnungs-/Schließstruktur für die Ladeöffnung (110) des Fahrzeugs nach Anspruch 4, wobei
der Vorsprung (422) zwei vorstehende Kämme umfasst, die oben und unten in einer Höhenrichtung des Ladeöffnungskastens (400) angeordnet sind, und ein Intervall zwischen den zwei vorstehenden Kämmen die Rinne (423) bildet.

6. Öffnungs-/Schließstruktur für die Ladeöffnung (110) des Fahrzeugs nach Anspruch 1, wobei eine Innenseite der Seitenwand des Ladeöffnungskastens (400), welche die erste Kontur aufweist, mit einem Vorsprung (422) versehen ist, eine Seite des Vorsprungs (422), die der Ladeöffnung (110) zugewandt ist, mit einer Rinne (423) versehen ist, die sich entlang der Umfangsrichtung des Ladeöffnungskastens (400) erstreckt, und das Drehgelenk (210) mit einem Schieber (212) versehen ist, der sich in einer Richtung parallel zu einer Drehachse der Ladeöffnungsabdeckung (200) erstreckt, und der Schieber (212) verschiebbar innerhalb der Rinne (423) verbunden ist.

7. Öffnungs-/Schließstruktur für die Ladeöffnung (110) des Fahrzeugs nach Anspruch 6, wobei
die Innenseite der Seitenwand des Ladeöffnungskastens (400), welche die erste Kontur aufweist, zu der Innenseite des Ladeöffnungskastens (400) vorsteht, um den Vorsprung (422) zu bilden; und
eine Hochfläche des Vorsprungs (422) benachbart zu der Ladeöffnung (110) zu einer Seite, die von der Ladeöffnung (110) abgewandt ist, ausgespart ist, um die Rinne (423) zu bilden.

8. Öffnungs-/Schließstruktur für die Ladeöffnung (110) des Fahrzeugs nach Anspruch 1, wobei
ein abdichtender Klebestreifen (500) zwischen einer Kante einer Seite des Ladeöffnungskastens (400), die der Karosserie (100) zugewandt ist, und der Karosserie (100) vorgesehen ist.

9. Öffnungs-/Schließstruktur für die Ladeöffnung (110) des Fahrzeugs nach Anspruch 1, wobei
ein Schnellladeanschluss (411) und ein Langsamladeanschluss (412) zum Laden durch eine Ladepistole in dem Ladeöffnungskasten (400) gemäß einem ersten Standard vorgesehen sind, und der Schnellladeanschluss (411) und der Langsamladeanschluss (412) oben und unten in einer gleichen Säule vorgesehen sind; und
die Antriebsvorrichtung (300) ferner dazu konfiguriert ist, die Ladeöffnungsabdeckung (200) anzutreiben, um sich in einem ersten Drehwinkel zu drehen, um den Schnellladeanschluss (411) und den Langsamladeanschluss (412) zumindest vollständig freizulegen.

10. Öffnungs-/Schließstruktur für die Ladeöffnung (110) des Fahrzeugs nach Anspruch 1, wobei
ein Schnellladeanschluss (411) und ein Langsamladeanschluss (412) zum Laden durch eine Ladepistole in dem Ladeöffnungskasten (400) gemäß einem zweiten Standard vorgesehen sind, und der Schnellladeanschluss (411) und der Langsamladeanschluss (412) Seite an Seite von links nach rechts vorgesehen sind; und
die Antriebsvorrichtung (300) ferner dazu konfiguriert ist, die Ladeöffnungsabdeckung (200) anzutreiben, um sich in einem zweiten Drehwinkel zu drehen, um den Schnellladeanschluss (411) und den Langsamladeanschluss (412) zumindest vollständig freizulegen.

11. Fahrzeug, umfassend eine Karosserie (100), die mit der Öffnungs-/Schließstruktur für die Ladeöffnung (110) des Fahrzeugs nach einem der Ansprüche 1 bis 10 versehen ist.

## Revendications

1. Structure d'ouverture/de fermeture pour un orifice de chargement (110) d'un véhicule, comprenant :
un couvercle d'orifice de chargement (200), disposé sur une coque de carrosserie (100) du véhicule et configuré pour ouvrir ou fermer un orifice de chargement (110) sur la coque de carrosserie (100) ; et
un dispositif d'entraînement (300), disposé à l'intérieur de la coque de carrosserie (100), relié au couvercle d'orifice de chargement (200), et configuré pour : d'abord entraîner le couvercle d'orifice de chargement (200) à partir d'un état fermé pour s'enfoncer vers l'intérieur depuis la coque de carrosserie (100), puis entraîner le couvercle d'orifice de chargement (200) en rotation, de manière à ouvrir au moins partiellement l'orifice de chargement (110) lorsque l'orifice de chargement (110) doit être ouvert ; d'abord entraîner le couvercle d'orifice de chargement (200) à partir d'un état ouvert en rotation pour s'aligner avec l'orifice de chargement (110), puis entraîner le couvercle d'orifice de chargement (200) pour monter vers l'extérieur de la coque de carrosserie (100), fermant ainsi l'orifice de chargement (110) lorsque l'orifice de chargement (110) doit être fermé ; **caractérisée en ce que** la structure d'ouverture/de fermeture comprend en outre :
un boîtier d'orifice de chargement (400), recouvrant l'orifice de chargement (110) depuis l'intérieur de la coque de carrosserie (100), dans laquelle au moins une partie d'une paroi latérale du boîtier d'orifice de chargement (400) présente un premier contour adapté à une trajectoire de rotation d'une extrémité du couvercle d'orifice de chargement (200) ;
un côté intérieur du couvercle d'orifice de chargement (200) est relié à une charnière de rotation (210), et le dispositif d'entraînement (300) est relié au couvercle d'orifice de chargement (200) par l'intermédiaire de la charnière de rotation (210), et dans un processus où le couvercle d'orifice de chargement (200) est entraîné en rotation, la charnière de rotation (210) est reliée de manière coulissante à la paroi latérale du boîtier d'orifice de chargement (400) présentant le premier contour.

2. Structure d'ouverture/de fermeture pour l'orifice de chargement (110) du véhicule selon la revendication 1, dans laquelle
la charnière de rotation (210) est pourvue d'un montant de liaison (211), le dispositif d'entraînement (300) est un moteur rotatif avec un arbre de sortie qui est extensible de manière alternative, et l'arbre de sortie du moteur rotatif est relié de manière coaxiale au montant de liaison (211).

3. Structure d'ouverture/de fermeture pour l'orifice de chargement (110) du véhicule selon la revendication 1, dans laquelle
la paroi latérale du boîtier d'orifice de chargement (400) présentant le premier contour est pourvue d'une ouverture de passage (421) pénétrante s'étendant le long d'une direction circonférentielle du boîtier d'orifice de chargement (400), et une extrémité de la charnière de rotation (210) est pourvue d'un coulisseau (212) s'étendant dans une direction perpendiculaire à un axe de rotation du couvercle d'orifice de chargement (200), et le coulisseau (212) est relié de manière coulissante à l'intérieur de l'ouverture de passage (421).

4. Structure d'ouverture/de fermeture pour l'orifice de chargement (110) du véhicule selon la revendication 1, dans laquelle
un côté intérieur de la paroi latérale du boîtier d'orifice de chargement (400) présentant le premier contour est pourvu d'un bossage (422), un côté du bossage (422) faisant face à l'intérieur du boîtier d'orifice de chargement (400) est pourvu d'une goulotte (423) s'étendant le long de la direction circonférentielle du boîtier d'orifice de chargement (400), et une extrémité de la charnière de rotation (210) est pourvue d'un coulisseau (212) s'étendant dans une direction perpendiculaire à un axe de rotation du couvercle d'orifice de chargement (200), et le coulisseau (212) est relié de manière coulissante à l'intérieur de la goulotte (423).

5. Structure d'ouverture/de fermeture pour l'orifice de chargement (110) du véhicule selon la revendication 4, dans laquelle
le bossage (422) comprend deux nervures saillantes disposées en haut et en bas dans une direction de la hauteur du boîtier d'orifice de chargement (400), et un intervalle entre les deux nervures saillantes forme la goulotte (423).

6. Structure d'ouverture/de fermeture pour l'orifice de chargement (110) du véhicule selon la revendication 1, dans laquelle un côté intérieur de la paroi latérale du boîtier d'orifice de chargement (400) présentant le premier contour est pourvu d'un bossage (422), un côté du bossage (422) faisant face à l'orifice de chargement (110) est pourvu d'une goulotte (423) s'étendant le long de la direction circonférentielle du boîtier d'orifice de chargement (400), et la charnière de rotation (210) est pourvue d'un coulisseau (212) s'étendant dans une direction parallèle à un axe de rotation du couvercle d'orifice de chargement (200), et le coulisseau (212) est relié de manière coulissante à l'intérieur de la goulotte (423).

7. Structure d'ouverture/de fermeture pour l'orifice de chargement (110) du véhicule selon la revendication 6, dans laquelle
le côté intérieur de la paroi latérale du boîtier d'orifice de chargement (400) présentant le premier contour fait saillie vers l'intérieur du boîtier d'orifice de chargement (400) pour former le bossage (422) ; et
un plateau du bossage (422) adjacent à l'orifice de chargement (110) est évidé vers un côté opposé à l'orifice de chargement (110) pour former la goulotte (423).

8. Structure d'ouverture/de fermeture pour l'orifice de chargement (110) du véhicule selon la revendication 1, dans laquelle
une bande adhésive d'étanchéité (500) est disposée entre un bord d'un côté du boîtier d'orifice de chargement (400) faisant face à la coque de carrosserie (100) et la coque de carrosserie (100).

9. Structure d'ouverture/de fermeture pour l'orifice de chargement (110) du véhicule selon la revendication 1, dans laquelle
un port de charge rapide (411) et un port de charge lente (412) pour le chargement par un pistolet de charge sont disposés dans le boîtier d'orifice de chargement (400) selon une première norme, et le port de charge rapide (411) et le port de charge lente (412) sont disposés en haut et en bas dans une même colonne ; et
le dispositif d'entraînement (300) est en outre configuré pour entraîner le couvercle d'orifice de chargement (200) en rotation selon un premier angle de rotation de manière à exposer au moins complètement le port de charge rapide (411) et le port de charge lente (412).

10. Structure d'ouverture/de fermeture pour l'orifice de chargement (110) du véhicule selon la revendication 1, dans laquelle
un port de charge rapide (411) et un port de charge lente (412) pour le chargement par un pistolet de charge sont disposés dans le boîtier d'orifice de chargement (400) selon une seconde norme, et le port de charge rapide (411) et le port de charge lente (412) sont disposés côte à côte de gauche à droite ; et
le dispositif d'entraînement (300) est en outre configuré pour entraîner le couvercle d'orifice de chargement (200) en rotation selon un second angle de rotation de manière à exposer au moins complètement le port de charge rapide (411) et le port de charge lente (412).

11. Véhicule comprenant une coque de carrosserie (100) pourvue de la structure d'ouverture/de fermeture pour l'orifice de chargement (110) du véhicule selon l'une quelconque des revendications 1 à 10.
